# EUROPEAN PATENT APPLICATION

(11) **EP 4 163 785 A1**
(43) Date of publication of application: **12.04.2023**
(21) Application number: 20938585.5
(22) Date of filing: 05.06.2020
(51) Int. Cl.: G06F 8/75

(54) **INFORMATION PROCESSING PROGRAM, INFORMATION PROCESSING METHOD, AND INFORMATION PROCESSING DEVICE**

(71) Applicant: FUJITSU LIMITED, Kawasaki-shi, Kanagawa 211-8588 (JP)
(72) Inventor: ONOUE, Satoshi, Kawasaki-shi, Kanagawa 211-8588 (JP); KATAOKA, Masahiro, Kawasaki-shi, Kanagawa 211-8588 (JP); MUKADE, Yuto, Kawasaki-shi, Kanagawa 211-8588 (JP); NAKANO, Daichi, Kawasaki-shi, Kanagawa 211-8588 (JP)
(74) Representative: Hoffmann Eitle
(86) International application number: PCT/JP2020/022440
(87) International publication number: WO 2021/245950

(57) **Abstract**

A program comprising instructions for causing a computer to perform processing including: performing a morphological analysis on a source code to divide the source code into a plurality of reserved words and a plurality of variables; performing, based on a static dictionary defining a relationship between a reserved word and a static code, assigning of the static code corresponding to the reserved word to the reserved word and assigning of a dynamic code to the variable, to thereby generate a compressed code array; registering the variable, the dynamic code assigned to the variable, and an attribute of the variable; calculating a vector of the source code by assigning a predetermined vector to the static code in the array and assigning a vector to the dynamic code in the array by embedding the dynamic code in a vector space based on the attribute corresponding to the dynamic code.

## Description

### FIELD

The present invention relates to an information processing program and the like.

### BACKGROUND ART

In computer programming, some sort of sign that a serious problem exists in a program source code is referred to as a code smell. For example, a duplicated code, an overly long method, a large class, or the like is to be the code smell. Programmers may automatically check for some code smells using tools such as Checkstyle, PMD, FindBugs, and the like.

Meanwhile, there is an existing technique (word2vec, etc.) of generating multidimensional vectors of words on the basis of adjacent words for the words constituting text. With such an existing technique applied to a source code (source program), it becomes possible to make an analysis using multidimensional vectors. The multidimensional vectors of words may improve the accuracy of tools for detecting code smells.

### SUMMARY OF INVENTION

### TECHNICAL PROBLEM

The existing technique of generating the multidimensional vectors of words focuses on a plurality of words before and after the word to which a vector is assigned, and generates the vector using the CBOW function or the like. Since each word of the words constituting the text has a unique meaning, each multidimensional vector also has a high degree of accuracy. The program source code includes reserved words such as control statements, operators, and the like, and variables. Since each reserved word has a common and unique meaning in a program, accuracy of its multidimensional vector is high. However, since an attribute of each variable is appropriately specified by a declaration statement in an individual program, there is a problem that the accuracy of its multidimensional vector is lowered. Meanwhile, recurrent neural network (RNN) machine translation has a problem that accuracy in translation of complex sentence text including multiple subjects, verbs, and objects is lowered. In a similar manner to this, similarity evaluation of a program containing a large number of functions and lines including multiple reserved words and variables has a problem that the accuracy is lowered.

In one aspect, an object of the present invention is to provide an information processing program, an information processing method, and an information processing apparatus capable of improving accuracy in similarity evaluation of a program source code.

### SOLUTION TO PROBLEM

In a first idea, a computer is caused to execute the following process. The computer performs a morphological analysis on a source code, thereby dividing the source code into a plurality of reserved words and a plurality of variables. The computer assigns, to a reserved word in the source code, a static code corresponding to the reserved word on the basis of a static dictionary that defines a relationship between reserved words and static codes, and assigns a dynamic code to a variable in the source code, thereby generating a compressed code array. The computer registers, in a dynamic dictionary, the variable, the dynamic code assigned to the variable, and an attribute of the variable in association with each other. The computer embeds the dynamic code in a vector space on the basis of the attribute corresponding to the dynamic code to assign a vector to the dynamic code in the compressed code array, and assigns a predetermined vector to the static code in the compressed code array, thereby calculating a vector of the source code.

### ADVANTAGEOUS EFFECTS OF INVENTION

Accuracy in similarity evaluation of a program source code may be improved.

### BRIEF DESCRIPTION OF DRAWINGS

FIG. 1 is a diagram for explaining processing of an information processing apparatus according to a present first embodiment;
FIG. 2 is a diagram illustrating an exemplary Poincare space;
FIG. 3 is a functional block diagram illustrating a configuration of the information processing apparatus according to the present first embodiment;
FIG. 4 is a diagram illustrating an exemplary data structure of a source code file according to the present first embodiment;
FIG. 5 is a diagram illustrating an exemplary data structure of static dictionary information according to the present first embodiment;
FIG. 6 is a diagram illustrating an exemplary data structure of dynamic dictionary information according to the present first embodiment;
FIG. 7 is a diagram illustrating an exemplary data structure of a compressed file according to the present first embodiment;
FIG. 8 is a diagram illustrating an exemplary data structure of a vector table according to the present first embodiment;
FIG. 9 is a flowchart illustrating a processing procedure of the information processing apparatus according to the present first embodiment;
FIG. 10 is a flowchart illustrating a processing procedure of a dynamic encoding process;
FIG. 11 is a diagram illustrating a configuration of an information processing apparatus according to a present second embodiment;
FIG. 12 is a diagram illustrating an exemplary data structure of a compressed file according to the present second embodiment;
FIG. 13 is a diagram illustrating an exemplary data structure of an inverted index table according to the present second embodiment;
FIG. 14 is a diagram illustrating an exemplary data structure of an inverted index according to the present second embodiment;
FIG. 15 is a flowchart illustrating a processing procedure of the information processing apparatus according to the present second embodiment;
FIG. 16 is a diagram illustrating exemplary PostScript data; and
FIG. 17 is a diagram illustrating an exemplary hardware configuration of a computer that implements functions similar to those of the information processing apparatus according to the embodiments.

### DESCRIPTION OF EMBODIMENTS

Hereinafter, embodiments of an information processing program, an information processing method, and an information processing apparatus disclosed in the present application will be described in detail with reference to the drawings. Note that the embodiments do not limit the present invention.

### [First Embodiment]

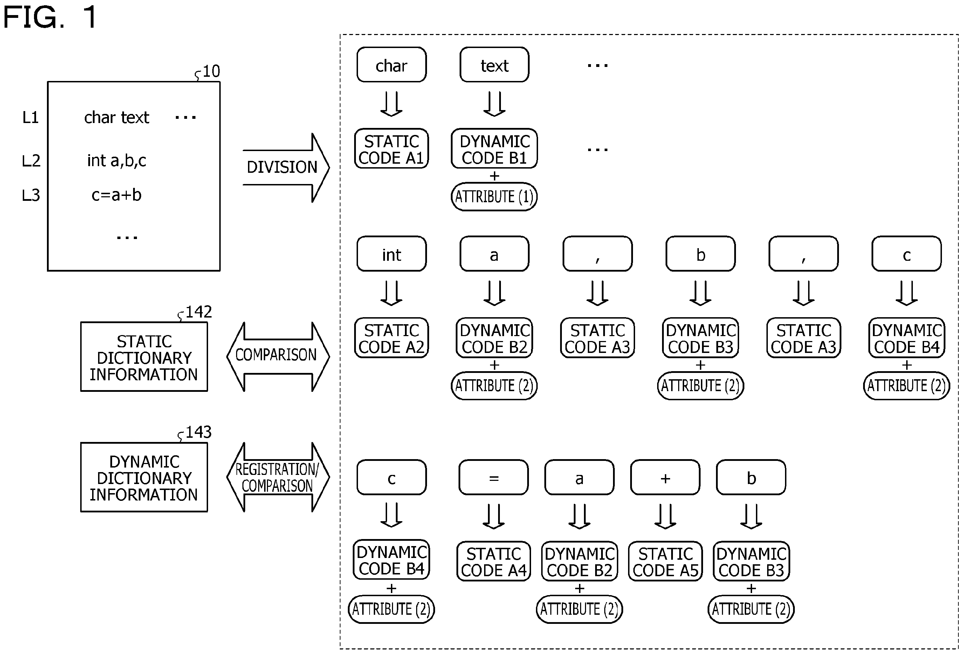

FIG. 1 is a diagram for explaining processing of an information processing apparatus according to a present first embodiment. The information processing apparatus according to the present first embodiment performs a morphological analysis on a source code 10, thereby dividing the source code into reserved words or variables. The reserved words include control statements, operators, declaration statements, punctuation, and the like.

For example, the information processing apparatus divides "char test" included in line L1 of the source code 10 into "char" and "text". The information processing apparatus divides "int a, b, c" included in line L2 of the source code 10 into "int", "a", ",", "b", ",", and "c". The information processing apparatus divides "c = a + b" included in line L3 of the source code 10 into "c", "=", "a", "+", and "b".

The information processing apparatus divides the source code 10 into reserved words or variables, and then assigns codes to the reserved words or variables. The information processing apparatus compares each reserved word with static dictionary information 142, and assigns a static code to the reserved word. The static dictionary information 142 is dictionary information that associates a reserved word with a static code.

The information processing apparatus assigns a dynamic code to each of the divided variables. For example, the information processing apparatus treats a character string not defined in the static dictionary information 142 as a variable. When a declaration statement exists before the variable, the information processing apparatus adds an attribute corresponding to the declaration statement to the dynamic code. The information processing apparatus registers, in dynamic dictionary information 143, a relationship between the variable, the dynamic code assigned to the variable, and the attribute added to the dynamic code.

Processing for the reserved word and variable included in line L1 of the source code 10 will be described. For example, the information processing apparatus assigns a static code A1 defined in the static dictionary information 142 to the reserved word (declaration statement) "char". The information processing apparatus assigns a dynamic code B1 to the variable "text". The information processing apparatus adds an attribute (1) corresponding to the declaration statement "char" existing before the variable "text" to the dynamic code B1. The information processing apparatus registers, in the dynamic dictionary information 143, the variable "text", the dynamic code "dynamic code B1", and the attribute (1) in association with each other.

Next, processing for the reserved words and variables included in line L2 of the source code 10 will be described. The information processing apparatus assigns a static code A2 defined in the static dictionary information 142 to the reserved word (declaration statement) "int". The information processing apparatus assigns a static code A3 defined in the static dictionary information 142 to the reserved word ",".

The information processing apparatus assigns a dynamic code B2 to the variable "a". The information processing apparatus adds an attribute (2) corresponding to the declaration statement "int" existing before the variable "a" to the dynamic code B1. The information processing apparatus registers, in the dynamic dictionary information 143, the variable "a", the dynamic code "dynamic code B2", and the attribute (2) in association with each other.

The information processing apparatus assigns a dynamic code B3 to the variable "b". The information processing apparatus adds the attribute (2) corresponding to the declaration statement "int" existing before the variable "b" to the dynamic code B3. For example, it is assumed that the information processing apparatus traces forward until a reserved statement of a preset type appears, and in a case where the reserved statement that has appeared is a declaration statement, it adds the attribute corresponding to the declaration statement to the dynamic code. The information processing apparatus registers, in the dynamic dictionary information 143, the variable "b", the dynamic code "dynamic code B3", and the attribute (2) in association with each other.

The information processing apparatus assigns a dynamic code B4 to the variable "c". The information processing apparatus adds the attribute (2) corresponding to the declaration statement "int" existing before the variable "c" to the dynamic code B4. The information processing apparatus registers, in the dynamic dictionary information 143, the variable "c", the dynamic code "dynamic code B4", and the attribute (2) in association with each other.

Next, processing for the reserved words and variables included in line L3 of the source code 10 will be described. The information processing apparatus assigns the dynamic code B4 registered in the dynamic dictionary information 143 to the variable "c". The attribute (2) is added to the dynamic code B2 through the process performed on line L2 of the source code 10.

The information processing apparatus assigns a static code A4 defined in the static dictionary information 142 to the reserved word (operator) "=".

The information processing apparatus assigns the dynamic code B2 registered in the dynamic dictionary information 143 to the variable "a". The attribute (2) is added to the dynamic code B2 through the process performed on line L2 of the source code 10.

The information processing apparatus assigns a static code A5 defined in the static dictionary information 142 to the reserved word (operator) "+".

The information processing apparatus assigns the dynamic code B4 registered in the dynamic dictionary information 143 to the variable "b". The attribute (2) is added to the dynamic code B4 through the process performed on line L2 of the source code 10.

The information processing apparatus generates a compressed code array in which the source code 10 is encoded by the process described with reference to FIG. 1 performed. The information processing apparatus assigns a vector to each static code and each dynamic code included in the compressed code array, thereby calculating a vector of the source code 10. For example, the information processing apparatus multiplies the vectors assigned to the individual static codes and dynamic codes included in the compressed code array, thereby calculating the vector of the source code 10.

The information processing apparatus embeds each static code and each dynamic code included in the compressed code array in a Poincare space, and assigns a vector corresponding to the position in the Poincare space to each static code and each dynamic code. The embedding processing in the Poincare space performed by the information processing apparatus is a technique called Poincare embeddings. For example, a technique disclosed in Non-Patent Document "Valentin Khrulkov et al., "Hyperbolic Image Embeddings", Cornell University, April 3, 2019" or the like may be used for the Poincare embeddings.

According to the Poincare embeddings, a vector is assigned corresponding to the embedded position in the Poincare space, and the higher the similarity of the information, the closer the information is embedded.

Note that the information processing apparatus may embed the static codes in the Poincare space in advance and calculate the vectors for the static codes.

The information processing apparatus embeds each dynamic code in the Poincare space on the basis of the attribute added to the dynamic code. The information processing apparatus embeds the individual dynamic codes to which the same attribute is added at close positions in the Poincare space.

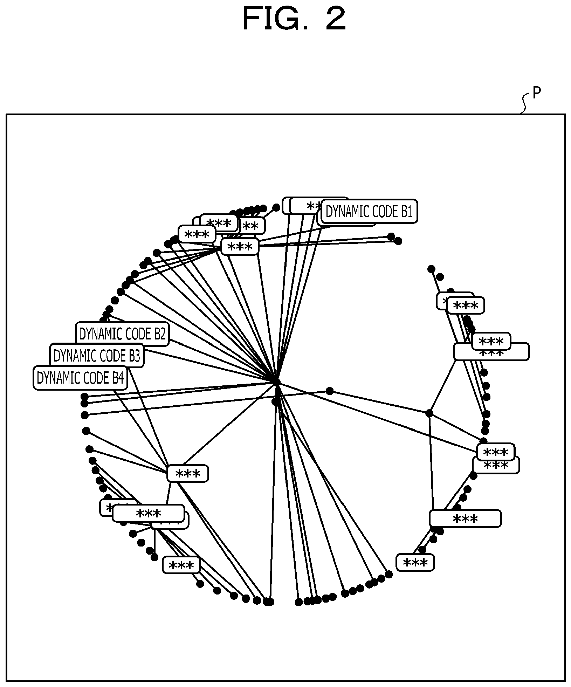

FIG. 2 is a diagram illustrating an example of the Poincare space. As described with reference to FIG. 1, the same attribute (2) is added to the dynamic code B2, the dynamic code B3, and the dynamic code B4. Accordingly, the information processing apparatus embeds the dynamic code B2, the dynamic code B3, and the dynamic code B4 at positions close to each other in a Poincare space P, and assigns vectors corresponding to the positions.

As described above, the information processing apparatus according to the present first embodiment divides the source code into reserved words and variables to assign static codes and dynamic codes, and adds attributes corresponding to related declaration statements to the dynamic codes. The information processing apparatus performs the Poincare embeddings on the static codes and the dynamic codes to assign similar vectors to similar codes, thereby calculating a vector of the source code. As a result, it becomes possible to calculate the vector of the source code highly accurately, and to improve the accuracy in similarity evaluation between source codes by using the vector.

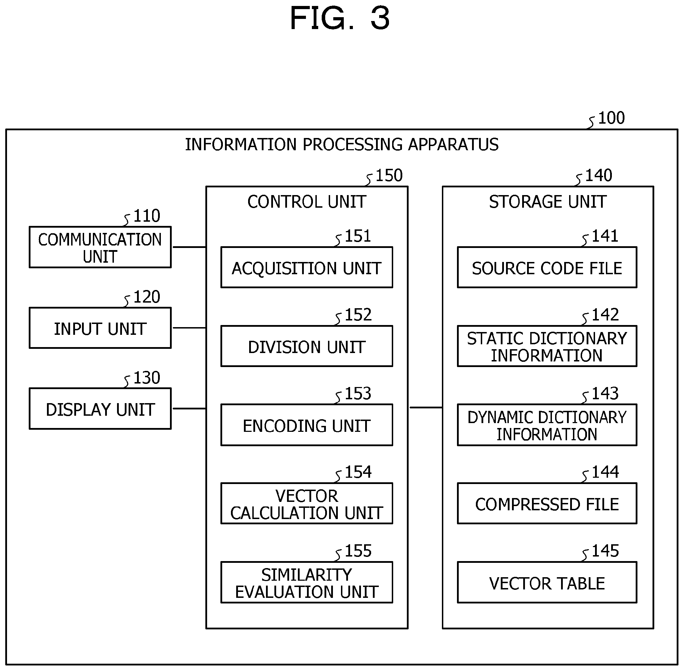

Next, an exemplary configuration of the information processing apparatus according to the present first embodiment will be described. FIG. 3 is a functional block diagram illustrating a configuration of the information processing apparatus according to the present first embodiment. As illustrated in FIG. 3, an information processing apparatus 100 includes a communication unit 110, an input unit 120, a display unit 130, a storage unit 140, and a control unit 150.

The communication unit 110 is connected to an external device or the like by wire or wirelessly, and exchanges information with the external device or the like. For example, the communication unit 110 is implemented by a network interface card (NIC) or the like. The communication unit 110 may be connected to a network (not illustrated).

The input unit 120 is an input device that inputs various types of information to the information processing apparatus 100. The input unit 120 corresponds to a keyboard, a mouse, a touch panel, or the like.

The display unit 130 is a display device that displays information output from the control unit 150. The display unit 130 corresponds to a liquid crystal display, an organic electro luminescence (EL) display, a touch panel, or the like.

The storage unit 140 includes a source code file 141, the static dictionary information 142, the dynamic dictionary information 143, a compressed file 144, and a vector table 145. For example, the storage unit 140 is implemented by a semiconductor memory element such as a random access memory (RAM) or a flash memory, or a storage device such as a hard disk or an optical disk.

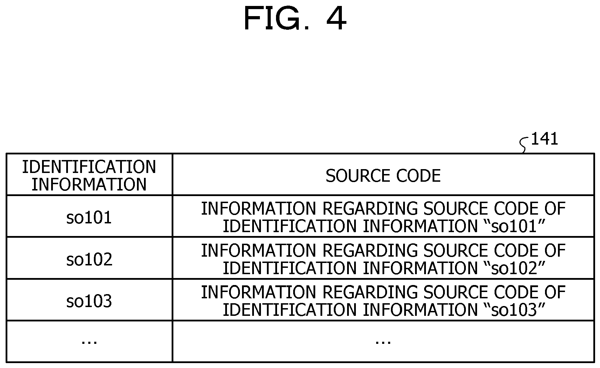

The source code file 141 is a file that retains multiple source codes. FIG. 4 is a diagram illustrating an exemplary data structure of the source code file according to the present first embodiment. As illustrated in FIG. 4, the source code file 141 associates identification information with a source code. The identification information is information that uniquely identifies a source code. The source code is character string data representing a computer program entered in a programming language. Each source code corresponds to a source code such as open source software (OSS) or the like. As described with reference to FIG. 1, the source code includes reserved words, variables, and the like.

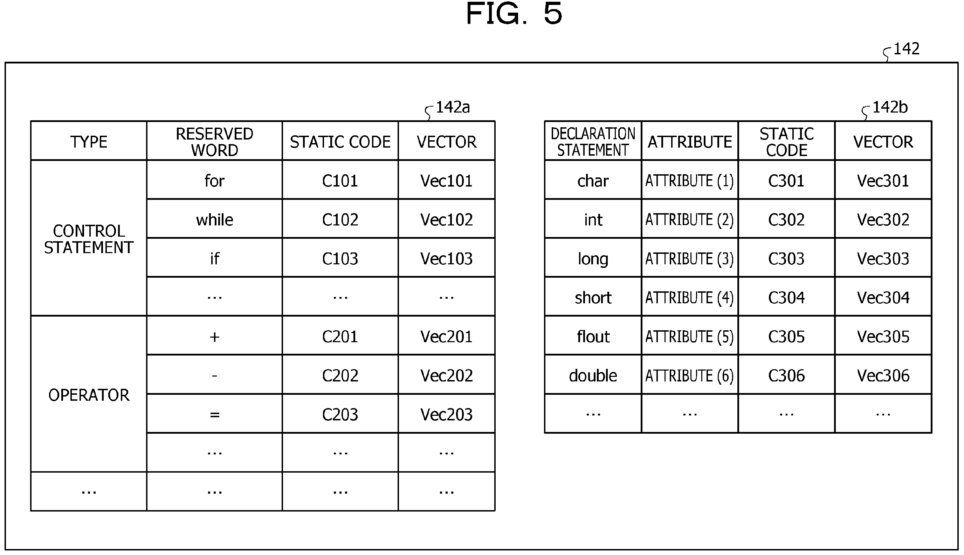

The static dictionary information 142 is dictionary information that defines static codes corresponding to reserved words. FIG. 5 is a diagram illustrating an exemplary data structure of the static dictionary information according to the present first embodiment. As illustrated in FIG. 5, the static dictionary information 142 includes a table 142a and a table 142b.

The table 142a is a table that defines static codes for reserved words other than declaration statements. The table 142a associates a type, a reserved word, a static code, and a vector with each other. The type indicates a type of a reserved word. Examples of the type of the reserved word include a control statement, an operator, and the like. The reserved word indicates a character string corresponding to the reserved word. The static code indicates a static code corresponding to the relevant reserved word. The vector indicates a vector assigned to a static code. It is assumed that each static code included in the static dictionary information 142 is subject to the Poincare embeddings in advance and a vector is assigned thereto.

The table 142b is a table that defines static codes and attributes of declaration statements. The table 142b associates a declaration statement, an attribute, a static code, and a vector with each other. The declaration statement indicates a character string of a declaration statement defined as a reserved word in advance. The attribute indicates an attribute corresponding to a declaration statement. The static code indicates a static code corresponding to the relevant declaration statement. The vector indicates a vector assigned to a static code.

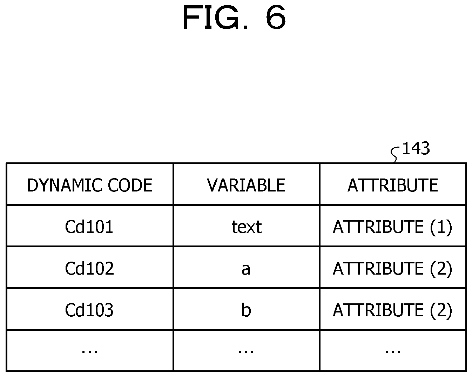

The dynamic dictionary information 143 is dictionary information that retains dynamic codes of variables not defined in the static dictionary information 142. FIG. 6 is a diagram illustrating an exemplary data structure of the dynamic dictionary information according to the present first embodiment. As illustrated in FIG. 6, the dynamic dictionary information 143 associates a dynamic code, a variable, and an attribute with each other. The dynamic code indicates a code dynamically assigned to a variable during dynamic encoding. A plurality of unique dynamic codes is reserved in advance, and each time a variable is detected from a source code, one dynamic code is assigned to the variable from unassigned dynamic codes. The variable indicates a variable detected from the source code. The attribute indicates an attribute added to a dynamic code.

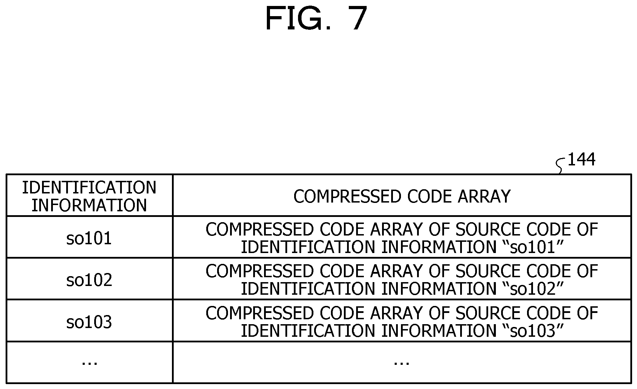

The compressed file 144 is a file that retains encoded source codes. FIG. 7 is a diagram illustrating an exemplary data structure of the compressed file according to the present first embodiment. As illustrated in FIG. 7, the compressed file 144 associates identification information with a compressed code array. The identification information is information that uniquely identifies the source code having been subject to encoding. For example, the source code corresponding to the identification information "so101" corresponds to the source code 10 described with reference to FIG. 1. Illustration of the source codes corresponding to the identification information "so102" and "so103" is omitted. The compressed code array corresponds to the encoded source code.

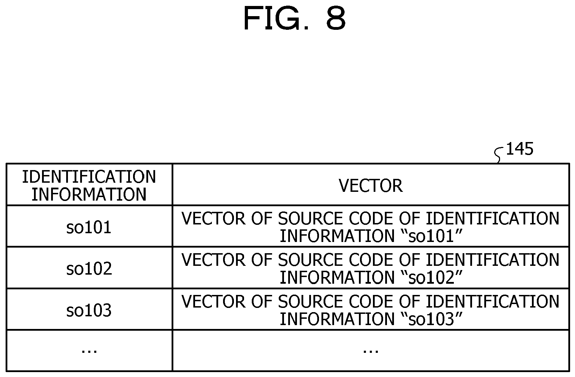

The vector table 145 is a table that retains source code vectors. FIG. 8 is a diagram illustrating an exemplary data structure of the vector table according to the present first embodiment. As illustrated in FIG. 8, the vector table 145 associates identification information with a vector. The identification information is information that uniquely identifies a source code. The vector is a vector corresponding to the source code.

The description returns to FIG. 3. The control unit 150 includes an acquisition unit 151, a division unit 152, an encoding unit 153, a vector calculation unit 154, and a similarity evaluation unit 155. The control unit 150 is implemented by, for example, a central processing unit (CPU) or a micro processing unit (MPU). Furthermore, the control unit 150 may be implemented by, for example, an integrated circuit such as an application specific integrated circuit (ASIC), a field programmable gate array (FPGA), or the like.

The acquisition unit 151 is a processing unit that obtains various types of information from an external device or the like via a network. For example, the acquisition unit 151 obtains the source code file 141, and stores the obtained source code file 141 in the storage unit 140. The acquisition unit 151 may obtain the static dictionary information 142 and the like to store them in the storage unit 140.

The division unit 152 is a processing unit that divides a source code into a plurality of reserved words and variables by obtaining the source code from the source code file 141 and executing the morphological analysis. The division unit 152 outputs a division result of the source code to the encoding unit 153. The encoding unit 153 adds source code identification information to the division result of the source code. The division unit 152 repeatedly executes the process described above for each source code stored in the source code file 141.

The encoding unit 153 is a processing unit that obtains the division result of the source code from the division unit 152 and assigns static codes and dynamic codes to the reserved words and variables included in the division result. Hereinafter, a process of assigning a static code to a reserved word and a process of assigning a dynamic code to a variable, which are performed by the encoding unit 153, will be described.

The encoding unit 153 compares the reserved word in the source code with the static dictionary information 142, identifies the static code corresponding to the reserved word, and assigns the static code to the reserved word.

The encoding unit 153 compares the variable in the source code with the dynamic dictionary information 143 to determine whether or not the relevant variable has already been registered in the dynamic dictionary information 143. In a case where the relevant variable has already been registered in the dynamic dictionary information 143, the encoding unit 153 assigns the registered dynamic code to the variable.

In a case where the relevant variable is not registered in the dynamic dictionary information 143, the encoding unit 153 assigns an unassigned dynamic code to the relevant variable. Furthermore, in a case where a declaration statement exists before the variable, the encoding unit 153 identifies the attribute corresponding to the declaration statement on the basis of the static dictionary information 142, as described with reference to FIG. 1. The encoding unit 153 registers, in the dynamic dictionary information 143, the variable, the dynamic code assigned to the variable, and the identified attribute in association with each other.

The encoding unit 153 repeatedly executes the process described above for each reserved word and each variable included in the division result of the source code, thereby generating a compressed code. The encoding unit 153 registers, in the compressed file 144, the identification information and the compressed code in association with each other. The encoding unit 153 repeatedly executes the process described above each time the division result of the source code is obtained.

The vector calculation unit 154 is a processing unit that calculates a vector of the source code by obtaining a compressed code array from the compressed file 144 and assigning a vector to each static code and each dynamic code included in the compressed code array.

The vector calculation unit 154 performs the Poincare embeddings on each static code of the static dictionary information 142 in advance to calculate a vector of each static code. For each static code included in the compressed code array, the vector calculation unit 154 identifies a vector corresponding to the static code by comparison with the static dictionary information 142, and assigns the identified vector.

The vector calculation unit 154 refers to the dynamic dictionary information 143, and performs the Poincare embeddings on the dynamic codes registered in the dynamic dictionary information 143, thereby calculating a vector of each dynamic code. At a time of embedding the dynamic codes in the Poincare space, the vector calculation unit 154 identifies the attributes added to the dynamic codes, adjusts the embedding positions in such a manner that the individual dynamic codes to which the same attribute is added are embedded at close positions in the Poincare space, and identifies the vectors corresponding to the positions as vectors of the dynamic codes.

The vector calculation unit 154 assigns the vector of each dynamic code obtained by the process described above to the corresponding dynamic code in the compressed code array.

The vector calculation unit 154 assigns a vector to each static code and each dynamic code included in the compressed code array, and multiplies the individual vectors, thereby calculating a vector of the source code. For example, a vector obtained by multiplying the vectors of the compressed code array corresponding to the identification information "so101" is to be the vector of the source code of the identification information "so101". The vector calculation unit 154 registers, in the vector table 145, the identification information and the vector in association with each other.

The vector calculation unit 154 repeatedly executes the process described above for each compressed code array stored in the compressed file 144.

The similarity evaluation unit 155 is a processing unit that evaluates a similarity level of the source code by comparing the vectors corresponding to the individual source codes registered in the vector table 145. For example, the similarity evaluation unit 155 calculates a vector distance of each source code, and identifies a set of source codes with the distance shorter than a threshold value as mutually similar source codes.

The similarity evaluation unit 155 may output an evaluation result to the display unit 130 for display, or may notify an external device or the like.

Furthermore, in a case where the similarity evaluation unit 155 receives a source code serving as a query, it may evaluate a similarity level between the source code serving as a query and another source code. In the following descriptions, the source code serving as a query will be referred to as a "query code". For example, a user may operate the input unit 120 to input the query code to the information processing apparatus 100.

The similarity evaluation unit 155 executes processing similar to that of the division unit 152, the encoding unit 153, and the vector calculation unit 154, thereby identifying a compressed code array of the query code and calculating a vector of the query code. The similarity evaluation unit 155 compares the vector of the query code with the vector of each source code registered in the vector table 145, thereby evaluating the similarity level of the source code.

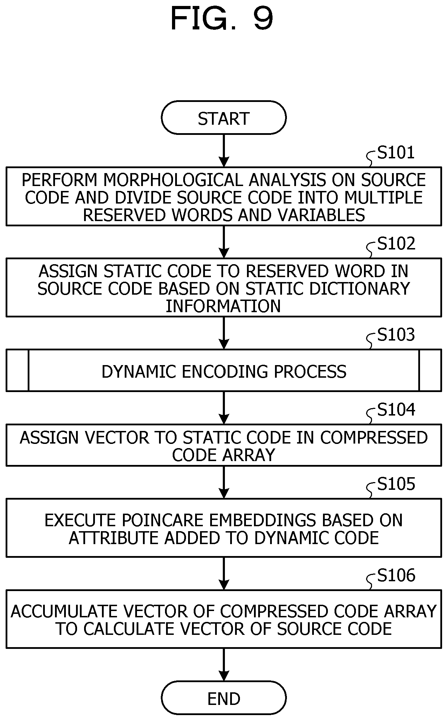

Next, an exemplary processing procedure of the information processing apparatus 100 according to the present first embodiment will be described. FIG. 9 is a flowchart illustrating a processing procedure of the information processing apparatus according to the present first embodiment. As illustrated in FIG. 9, the division unit 152 of the information processing apparatus 100 performs the morphological analysis on the source code, and divides it into a plurality of reserved words and variables (step S101).

The encoding unit 153 of the information processing apparatus 100 assigns a static code to a reserved word in the source code on the basis of the static dictionary information 142 (step S102). The encoding unit 153 performs a dynamic encoding process (step S103).

The encoding unit 153 assigns vectors to the static codes in the compressed code array (step S104). The encoding unit 153 executes the Poincare embeddings on the basis of the attributes added to the dynamic codes (step S105). The vector calculation unit 154 of the information processing apparatus 100 accumulates the vectors of the compressed code array to calculate a vector of the source code (step S106).

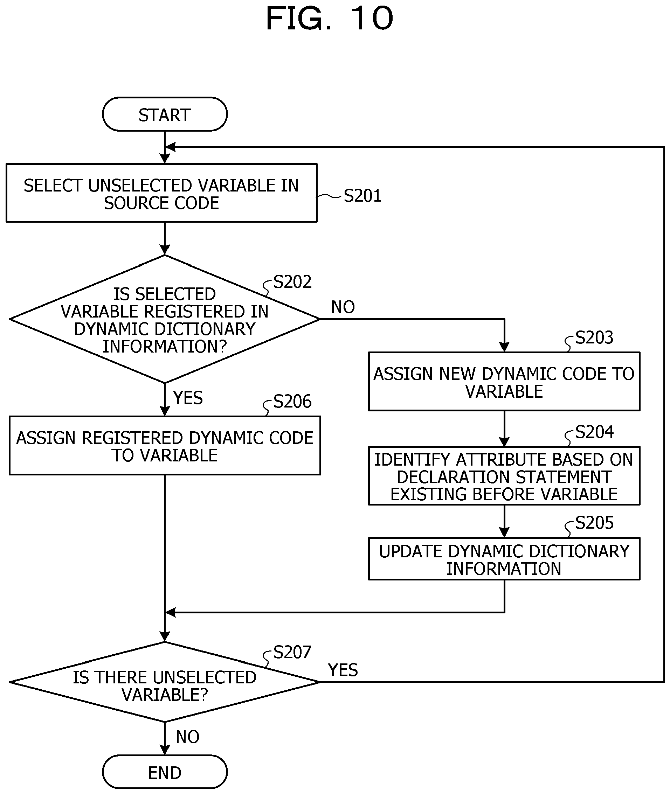

Next, an exemplary processing procedure of the dynamic encoding process indicated in step S103 in FIG. 9 will be described. FIG. 10 is a flowchart illustrating a processing procedure of the dynamic encoding process. As illustrated in FIG. 10, the encoding unit 153 of the information processing apparatus 100 selects an unselected variable in the source code (step S201). If the selected variable is registered in the dynamic dictionary information 143 (Yes in step S202), the encoding unit 153 proceeds to step S206. On the other hand, if the selected variable is not registered in the dynamic dictionary information (No in step S202), the encoding unit 153 proceeds to step S203.

The encoding unit 153 assigns a new dynamic code to the variable (step S203). The encoding unit 153 identifies the attribute on the basis of the declaration statement existing before the variable (step S204). The encoding unit 153 updates the dynamic dictionary information (step S205), and proceeds to step S207. In step S205, the encoding unit 153 registers, in the dynamic dictionary information 143, the variable, the dynamic code, and the attribute in association with each other.

The encoding unit 153 assigns a registered dynamic code (step S206). If there is an unselected variable (Yes in step S207), the encoding unit 153 proceeds to step S201. If there is no unselected variable (No in step S207), the encoding unit 153 terminates the dynamic encoding process.

Next, effects of the information processing apparatus 100 according to the present first embodiment will be described. The information processing apparatus 100 divides the source code into reserved words and variables to assign static codes and dynamic codes, and adds attributes corresponding to related declaration statements to the dynamic codes. The information processing apparatus 100 performs the Poincare embeddings on the static codes and the dynamic codes to assign similar vectors to similar codes, thereby calculating a vector of the source code. As a result, it becomes possible to calculate the vector of the source code highly accurately, and to improve the accuracy in similarity evaluation between source codes by using the vector.

The information processing apparatus 100 identifies the attribute of the dynamic code to be assigned to the variable on the basis of the declaration statement existing before the variable. As a result, it becomes possible to identify the variable dynamic codes classified into the same attribute, and to assign appropriate vectors to the dynamic codes.

The information processing apparatus 100 executes the Poincare embeddings on the basis of the attributes added to the dynamic codes. Accordingly, it becomes possible to assign mutually similar vectors to the dynamic codes to which the same attribute is added.

### [Second Embodiment]

Next, an information processing apparatus according to a present second embodiment will be described. The information processing apparatus according to the present second embodiment calculates a vector for each line at a time of generating a compressed code array of a source code. This makes it possible to evaluate a similarity level for each line of the source code. In the present second embodiment, when a static code and a dynamic code are not particularly distinguished from each other, the static code and the dynamic code are collectively referred to as a "compressed code".

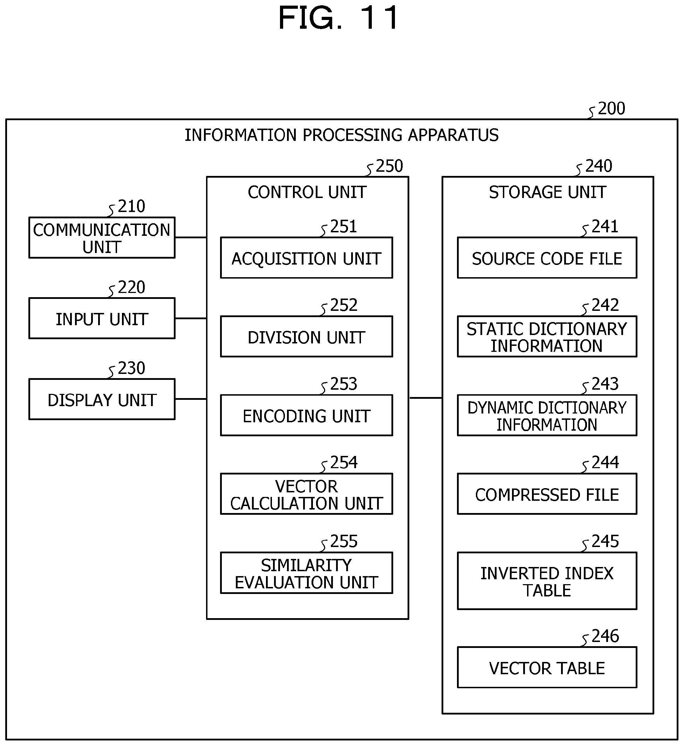

FIG. 11 is a diagram illustrating a configuration of the information processing apparatus according to the present second embodiment. As illustrated in FIG. 11, this information processing apparatus 200 includes a communication unit 210, an input unit 220, a display unit 230, a storage unit 240, and a control unit 250.

Descriptions regarding the communication unit 210, the input unit 220, and the display unit 230 are similar to the descriptions regarding the communication unit 110, the input unit 120, and the display unit 130 described in the first embodiment.

The storage unit 240 includes a source code file 241, static dictionary information 242, dynamic dictionary information 243, a compressed file 244, an inverted index table 245, and a vector table 246. For example, the storage unit 240 is implemented by a semiconductor memory element such as a RAM or a flash memory, or a storage device such as a hard disk or an optical disk.

The source code file 241 is a file that retains multiple source codes. A data structure of the source code file 241 is similar to the data structure of the source code file 141 described in the first embodiment.

The static dictionary information 242 is dictionary information that defines static codes corresponding to reserved words. A data structure of the static dictionary information 242 is similar to the data structure of the static dictionary information 142 described with reference to FIG. 5. Although descriptions are omitted in FIG. 5, it is assumed that a static code corresponding to a line feed is defined in the static dictionary information 142.

The dynamic dictionary information 243 is dictionary information that retains dynamic codes of variables not defined in the static dictionary information 242. A data structure of the dynamic dictionary information 243 is similar to the data structure of the dynamic dictionary information 143 described with reference to FIG. 7.

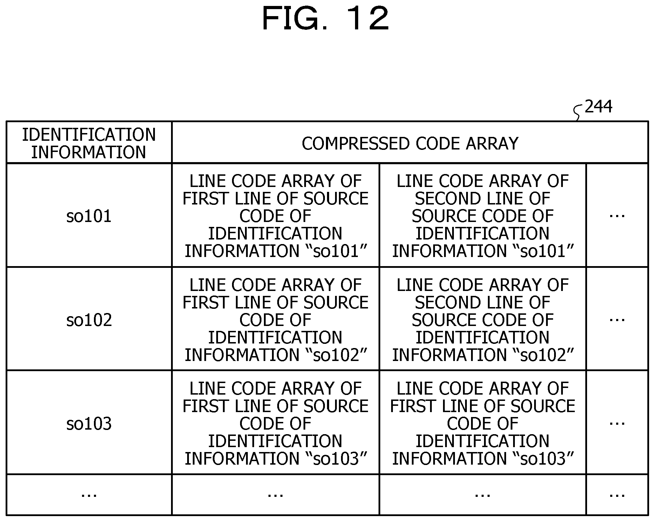

The compressed file 244 is a file that retains source codes encoded in line units. FIG. 12 is a diagram illustrating an exemplary data structure of the compressed file according to the present second embodiment. As illustrated in FIG. 12, the compressed file 244 associates identification information with a compressed code array. The identification information is information that uniquely identifies the source code having been subject to encoding. The compressed code array indicates a compressed code array for each line of the source code. In the following descriptions, a line-by-line grouping of multiple compressed codes included in the compressed code array of the source code will be referred to as a "line code array".

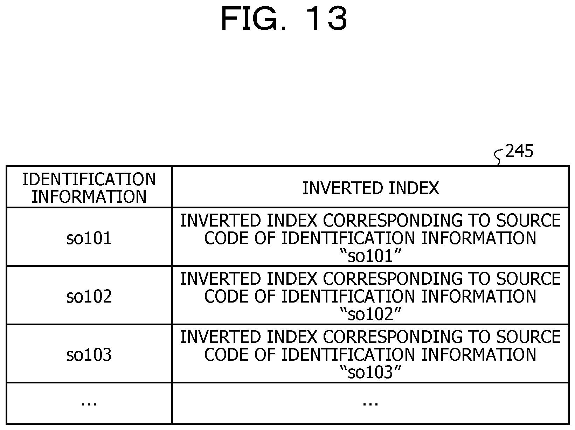

The inverted index table 245 is a table that retains respective inverted indices corresponding to respective encoded source codes. FIG. 13 is a diagram illustrating an exemplary data structure of the inverted index table according to the present second embodiment. As illustrated in FIG. 13, the inverted index table 245 associates identification information with an inverted index. The identification information is information that uniquely identifies the source code having been subject to encoding. The inverted index is information indicating a relationship between a vector of the line code array of the source code (line vector) and an offset.

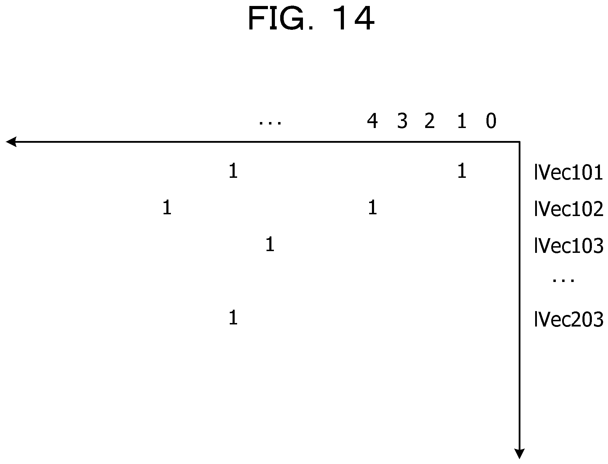

FIG. 14 is a diagram illustrating an exemplary data structure of the inverted index according to the present second embodiment. As illustrated in FIG. 14, the inverted index takes an offset on the horizontal axis, and takes a line vector of the line code array on the vertical axis. The offset indicates an appearance position from the compressed code at the top of the source code to the compressed code at the top of the corresponding line code array. The offset of the compressed code at the top of the source code is set to "0".

The vector table 246 is a table that retains source code vectors. A data structure of the vector table 246 is similar to the data structure of the vector table 145 described with reference to FIG. 8.

The description returns to FIG. 11. The control unit 250 includes an acquisition unit 251, a division unit 252, an encoding unit 253, a vector calculation unit 254, and a similarity evaluation unit 255. The control unit 250 is implemented by, for example, a CPU or an MPU. Furthermore, the control unit 250 may be implemented by, for example, an integrated circuit such as an ASIC, an FPGA, or the like.

The acquisition unit 251 is a processing unit that obtains various types of information from an external device or the like via a network. For example, the acquisition unit 251 obtains the source code file 241, and stores the obtained source code file 241 in the storage unit 240. The acquisition unit 251 may obtain the static dictionary information 242 and the like to store them in the storage unit 240.

The division unit 252 is a processing unit that divides a source code into a plurality of reserved words (including line feeds) and variables by obtaining the source code from the source code file 241 and executing a morphological analysis. The division unit 252 outputs a division result of the source code to the encoding unit 253. The division unit 252 adds source code identification information to the division result of the source code. The division unit 252 repeatedly executes the process described above for each source code stored in the source code file 241.

The encoding unit 253 is a processing unit that obtains the division result of the source code from the division unit 252 and assigns static codes and dynamic codes to the reserved words and variables included in the division result. Hereinafter, a process of assigning a static code to a reserved word and a process of assigning a dynamic code to a variable, which are performed by the encoding unit 253, will be described.

The encoding unit 253 compares the reserved word in the source code with the static dictionary information 242, identifies the static code corresponding to the reserved word, and assigns the static code to the reserved word.

The encoding unit 253 compares the variable in the source code with the dynamic dictionary information 243 to determine whether or not the relevant variable has already been registered in the dynamic dictionary information 243. In a case where the relevant variable has already been registered in the dynamic dictionary information 243, the encoding unit 253 assigns the registered dynamic code to the variable.

In a case where the relevant variable is not registered in the dynamic dictionary information 243, the encoding unit 253 assigns an unassigned dynamic code to the relevant variable. Furthermore, in a case where a declaration statement exists before the variable, the encoding unit 253 identifies the attribute corresponding to the declaration statement on the basis of the static dictionary information 242, as described in the first embodiment. The encoding unit 253 registers, in the dynamic dictionary information 243, the variable, the dynamic code assigned to the variable, and the identified attribute in association with each other.

The encoding unit 253 repeatedly executes the process described above for each reserved word and each variable included in the division result of the source code, thereby generating a compressed code array. Here, the encoding unit 253 scans the compressed code array, identifies static codes for line feeds, and discriminates the compressed code array as a plurality of line code arrays. The encoding unit 253 registers, in the compressed file 244, the identification information and each of the line code arrays in association with each other. The encoding unit 253 repeatedly executes the process described above each time the division result of the source code is obtained.

The vector calculation unit 254 is a processing unit that calculates a vector of a line code array by obtaining the line code array from the compressed file 244 and assigning a vector to each static code and each dynamic code included in the line code array. The process in which the vector calculation unit 254 assigns a vector to each static code and each dynamic code is similar to the process of the vector calculation unit 154 described in the first embodiment. In the following descriptions, the vector of the line code array will be appropriately referred to as a "line vector". Furthermore, the vector calculation unit 254 generates the vector table 246 in a similar manner to the vector calculation unit 154 in the first embodiment.

After assigning a vector to each static code and each dynamic code included in the line code array, the vector calculation unit 254 calculates, as a line vector, a vector obtained by multiplying the vectors of the respective static codes and dynamic codes included in the line code array. The vector calculation unit 254 generates an inverted index on the basis of the line vector and the position of the line code array.

For example, the processing of the vector calculation unit 254 will be described with reference to FIG. 14. It is assumed that the offset of the compressed code at the top of the line code array starting from the top of the source code is "1" and the line vector is "IVec101". In this case, the vector calculation unit 254 places "1" at the intersection of the line of the line vector IVec101 and the column of the offset "1". The vector calculation unit 254 repeatedly executes the processing described above for each line code array, thereby generating an inverted index corresponding to the source code.

The vector calculation unit 254 repeatedly executes the processing described above for the compressed code array of each source code, thereby generating the inverted index table 245.

The similarity evaluation unit 255 is a processing unit that carries out similarity evaluation between a query code and another source code when the source code serving as a query (query code) is received. For example, a user may operate the input unit 220 to input the query code to the information processing apparatus 200.

The similarity evaluation unit 255 executes processing similar to that of the division unit 252, the encoding unit 253, and the vector calculation unit 254, thereby identifying the compressed code array and the line code array of the query code and calculating a vector of the query code and a line vector of each line code array.

The similarity evaluation unit 255 compares the vector of the query code with the vector of each source code registered in the vector table 246, thereby evaluating the similarity level of the source code. For example, the similarity evaluation unit 255 calculates a vector distance between the query code and the source code, and identifies the source code in which the distance is shorter than a threshold value as a source code similar to the query code. In the following descriptions, the source code similar to the query code will be referred to as a "similar code".

Furthermore, the similarity evaluation unit 255 may execute the following process to detect information regarding the similar code similar to the query code line. The similarity evaluation unit 255 obtains, from the inverted index table 245, the inverted index of the similar code using the identification information of the similar code as a key.

When selection of the query code line is received, the similarity evaluation unit 255 identifies the line vector of the inverted index in which the distance from the line vector of the selected line is less than a threshold value, and identifies the offset corresponding to the identified line vector. The query code line may be selected by the user operating the input unit 220.

The similarity evaluation unit 255 obtains the compressed code array corresponding to the identification information of the similar code from the compressed file 244, and extracts the line code array corresponding to the identified offset from the compressed code array. The similarity evaluation unit 255 decodes the line code array on the basis of the static dictionary information 242 and the dynamic dictionary information 243, and displays the decoded code on the display unit 230 in association with the query code line.

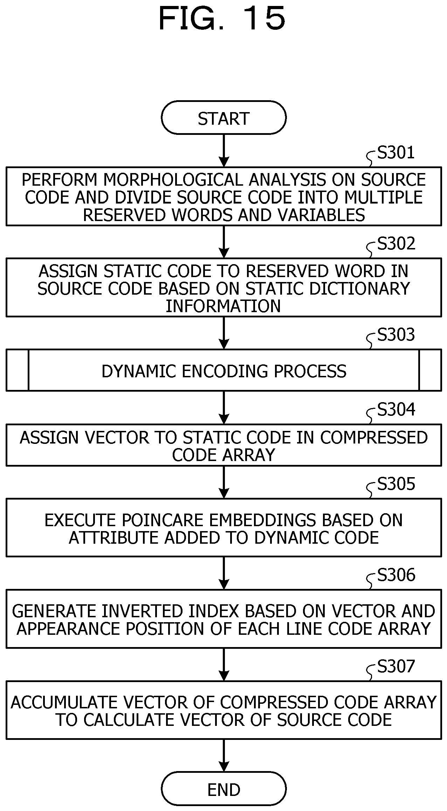

Next, an exemplary processing procedure of the information processing apparatus 200 according to the present second embodiment will be described. FIG. 15 is a flowchart illustrating a processing procedure of the information processing apparatus according to the present second embodiment. As illustrated in FIG. 15, the division unit 252 of the information processing apparatus 200 performs the morphological analysis on the source code, and divides it into a plurality of reserved words and variables (step S301).

The encoding unit 253 of the information processing apparatus 200 assigns a static code to a reserved word in the source code on the basis of the static dictionary information 242 (step S302). The encoding unit 253 performs a dynamic encoding process (step S303).

The encoding unit 253 assigns vectors to the static codes in the compressed code array (step S304). The encoding unit 253 executes the Poincare embeddings on the basis of the attributes added to the dynamic codes (step S305). The vector calculation unit 254 of the information processing apparatus 200 generates an inverted index on the basis of the vector and appearance position of each line code array (step S306). The vector calculation unit 254 accumulates the vectors of the compressed code array to calculate a vector of the source code (step S307).

Next, effects of the information processing apparatus 200 according to the present second embodiment will be described. The information processing apparatus 200 generates a line code array for each line of the source code, and generates an inverted index in which the line vector of the line code array is associated with the appearance position of the line code array. When specification of the query code line is received, the information processing apparatus 200 may retrieve the information regarding the line of the source code similar to the specified line by comparing the line vector of the specified line with the line vector of the inverted index. In other words, the similar source code may be retrieved according to line granularity.

Meanwhile, although the information processing apparatus 200 according to the present second embodiment generates a vector for each line of the source code and generates an inverted index, it is not limited to this. For example, the information processing apparatus 200 may generate vectors in units of functions instead of generating vectors in units of source code lines to execute the process described above.

Furthermore, although the case where the information processing apparatus 100 (200) converts the source code such as OSS into a vector has been described in the present first and second embodiments, it is not limited to this. The information processing apparatus 100 may perform the process described above on PostScript data to calculate a vector corresponding to the PostScript data, and may compare the vectors of the individual PostScript data to evaluate a similarity level.

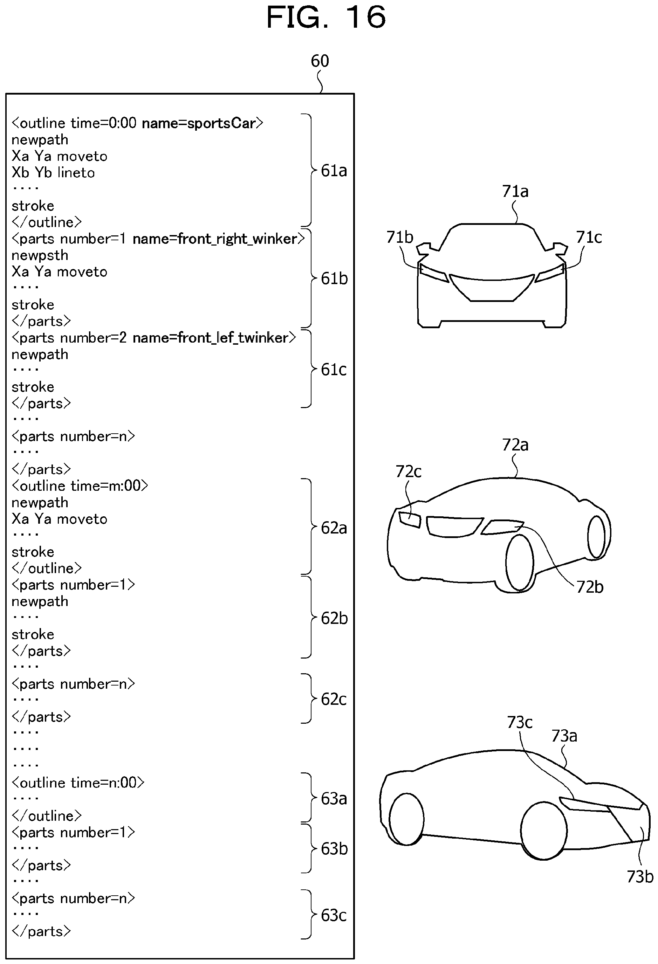

FIG. 16 is a diagram illustrating exemplary PostScript data. In PostScript data 60 illustrated in FIG. 16, each part represents a specific shape. For example, data contained in an entire outline 61a represents a vehicle outline 71a. Data contained in a part 61b represents a shape of a vehicle part 71b. Data contained in a part 61c represents a shape of a vehicle part 71c.

Data contained in an entire outline 62a, which is rotated m/24, represents a vehicle outline 72a. Data contained in a part 62b represents a shape of a vehicle part 72b. Data contained in a part 62c represents a shape of a vehicle part 72c.

Data contained in an entire outline 63a, which is rotated n/24, represents a vehicle outline 73a. Data contained in a part 63b represents a shape of a vehicle part 73b. Data contained in a part 63c represents a shape of a vehicle part 73c.

The information processing apparatus 100 (200) may calculate vectors of the entire outline and the individual parts for each rotation angle of the PostScript data 60, and may compare the primary structure vectors corresponding to the lines and functions to evaluate the similarity level.

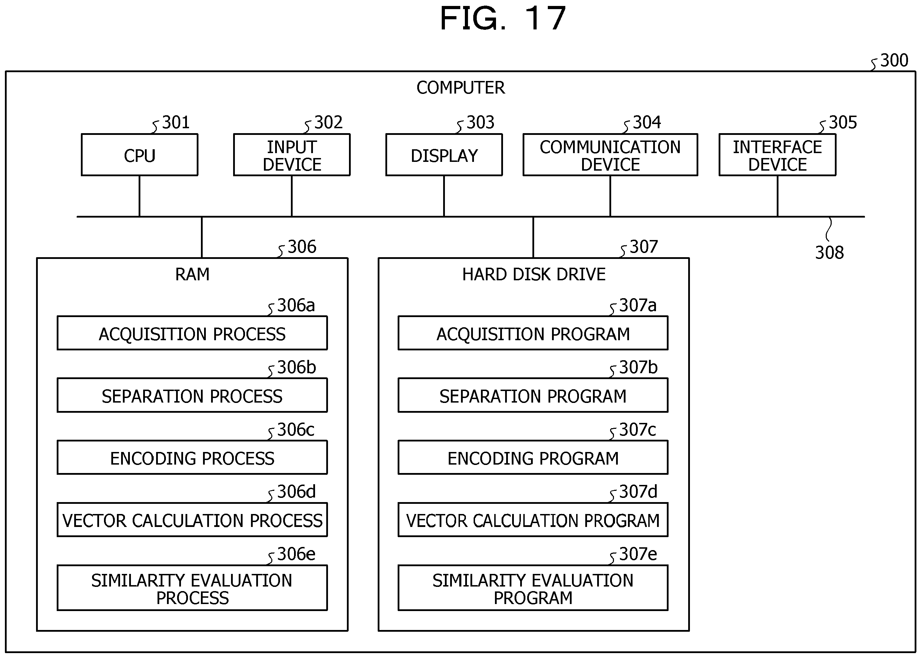

Next, an exemplary hardware configuration of a computer that implements functions similar to those of the information processing apparatus 100 (200) described in the embodiments above will be described. FIG. 17 is a diagram illustrating an exemplary hardware configuration of the computer that implements functions similar to those of the information processing apparatus according to the embodiments.

As illustrated in FIG. 17, a computer 300 includes a CPU 301 that executes various types of arithmetic processing, an input device 302 that receives data input by the user, and a display 303. Furthermore, the computer 300 includes a communication device 304 that exchanges data with an external device or the like via a wired or wireless network, and an interface device 305. Furthermore, the computer 300 includes a RAM 306 that temporarily stores various types of information, and a hard disk drive 307. Additionally, each of the devices 301 to 307 is connected to a bus 308.

The hard disk drive 307 includes an acquisition program 307a, a division program 307b, an encoding program 307c, a vector calculation program 307d, and a similarity evaluation program 307e. Furthermore, the CPU 301 reads each of the programs 307a to 307e, and loads them into the RAM 306.

The acquisition program 307a functions as an acquisition process 306a. The division program 307b functions as a separation process 306b. The encoding program 307c functions as an encoding process 306c. The vector calculation program 307d functions as a vector calculation process 306d. The similarity evaluation program 307e functions as a similarity evaluation process 306e.

Processing of the acquisition process 306a corresponds to the processing of the acquisition units 151 and 251. Processing of the separation process 306b corresponds to the processing of the division units 152 and 252. Processing of the encoding process 306c corresponds to the processing of the encoding units 153 and 253. Processing of the vector calculation process 306d corresponds to the processing of the vector calculation units 154 and 254. Processing of the similarity evaluation process 306e corresponds to the processing of the similarity evaluation units 155 and 255.

Note that each of the programs 307a to 307e may not necessarily be stored in the hard disk drive 307 beforehand. For example, each of the programs is stored in a "portable physical medium" to be inserted in the computer 300, such as a flexible disk (FD), a compact disc read only memory (CD-ROM), a digital versatile disc (DVD), a magneto-optical disk, an integrated circuit (IC) card, or the like. Then, the computer 300 may read and execute each of the programs 307a to 307e.

### CITATION LIST

### PATENT DOCUMENT

Patent Document 1: Japanese Laid-open Patent Publication No. 2012-252519
Patent Document 2: Japanese Laid-open Patent Publication No. 2016-177359
Patent Document 3: Japanese Laid-open Patent Publication No. 2010-2961

### NON-PATENT DOCUMENT

Non-Patent Document 1: Deep Learning Based Code Smell Detection, IEEE '19

### REFERENCE SIGNS LIST

100, 200Information processing apparatus
110, 210Communication unit
120, 220Input unit
130, 230Display unit
140, 240Storage unit
141, 241Source code file
142, 242Static dictionary information
143, 243Dynamic dictionary information
144, 244Compressed file
145, 246Vector table
150, 250Control unit
151, 251Acquisition unit
152, 252Division unit
153, 253Encoding unit
154, 254Vector calculation unit
155, 255Similarity evaluation unit
245Inverted index table

## Claims

1. An information processing program comprising instructions which, when executed by a computer, cause the computer to perform processing, the processing comprising:
performing a morphological analysis on a source code to divide the source code into a plurality of reserved words and a plurality of variables;
performing, on a basis of a static dictionary that defines a relationship between a reserved word and a static code, assigning of the static code that corresponds to the reserved word to the reserved word in the source code and assigning of a dynamic code to the variable in the source code, to thereby generate a compressed code array;
registering, in a dynamic dictionary, the variable, the dynamic code assigned to the variable, and an attribute of the variable in association with each other;
calculating a vector of the source code, the calculating of the vector including: assigning a predetermined vector to the static code in the compressed code array and assigning a vector to the dynamic code in the compressed code array by embedding the dynamic code in a vector space on a basis of the attribute that corresponds to the dynamic code.

2. The information processing program according to claim 1, wherein
the static dictionary further defines a relationship between a declaration statement and the attribute, and
the processing includes identifying the attribute that corresponds to the variable on a basis of the attribute of the declaration statement placed before the variable.

3. The information processing program according to claim 1, the processing further comprising:
embedding a plurality of the dynamic codes that corresponds to the same attribute at analogous positions in a Poincare space; and
assigning vectors that correspond to the positions in the Poincare space to the embedded dynamic codes.

4. The information processing program according to claim 1, the processing further comprising:
generating the compressed code array for each line of the source code;
calculating a vector of the compressed code array for each line; and
generating an inverted index indicating a relationship between the vector of each compressed code array and a corresponding offset.

5. The information processing program according to claim 1, the processing further comprising:
generating the compressed code array for each function included in the source code;
calculating a vector of the compressed code array for each function; and
generating an inverted index indicating a relationship between the vector of each compressed code array and a corresponding offset.

6. The information processing program according to any one of claims 1 to 5, the processing further comprising:
evaluating a similarity level of a plurality of the source codes on a basis of the vector of the source code.

7. The information processing program according to claim 4, the processing further comprising:
identifying the line of the source code analogous to the line of the source code that serves as a query on a basis of the vector that corresponds to the line of the source code that serves as the query and the inverted index.

8. The information processing program according to claim 5, the processing further comprising:
identifying the function of the source code that corresponds to the line of the source code that serves as a query on a basis of the vector that corresponds to the function of the source code that serves as the query and the inverted index.

9. An information processing method implemented by a computer, the method comprising:
performing a morphological analysis on a source code to divide the source code into a plurality of reserved words and a plurality of variables;
performing, on a basis of a static dictionary that defines a relationship between a reserved word and a static code, assigning of the static code that corresponds to the reserved word to the reserved word in the source code and assigning of a dynamic code to the variable in the source code, to thereby generate a compressed code array;
registering, in a dynamic dictionary, the variable, the dynamic code assigned to the variable, and an attribute of the variable in association with each other;
calculating a vector of the source code, the calculating of the vector including: assigning a predetermined vector to the static code in the compressed code array and assigning a vector to the dynamic code in the compressed code array by embedding the dynamic code in a vector space on a basis of the attribute that corresponds to the dynamic code.

10. The information processing method according to claim 9, wherein
the static dictionary further defines a relationship between a declaration statement and the attribute, and
the processing includes identifying the attribute that corresponds to the variable on a basis of the attribute of the declaration statement placed before the variable.

11. The information processing method according to claim 9, the processing further comprising:
embedding a plurality of the dynamic codes that corresponds to the same attribute at analogous positions in a Poincare space; and
assigning vectors that correspond to the positions in the Poincare space to the embedded dynamic codes.

12. The information processing method according to claim 9, the processing further comprising:
generating the compressed code array for each line of the source code;
calculating a vector of the compressed code array for each line; and
generating an inverted index indicating a relationship between the vector of each compressed code array and a corresponding offset.

13. The information processing method according to claim 9, the processing further comprising:
generating the compressed code array for each function included in the source code;
calculating a vector of the compressed code array for each function; and
generating an inverted index indicating a relationship between the vector of each compressed code array and a corresponding offset.

14. The information processing method according to any one of claims 9 to 13, the processing further comprising:
evaluating a similarity level of a plurality of the source codes on a basis of the vector of the source code.

15. The information processing method according to claim 12, the processing further comprising:
identifying the line of the source code analogous to the line of the source code that serves as a query on a basis of the vector that corresponds to the line of the source code that serves as the query and the inverted index.

16. The information processing method according to claim 13, the processing further comprising:
identifying the function of the source code that corresponds to the line of the source code that serves as a query on a basis of the vector that corresponds to the function of the source code that serves as the query and the inverted index.

17. An information processing apparatus comprising:
a division unit configured to perform a morphological analysis on a source code to divide the source code into a plurality of reserved words and a plurality of variables;
an encoding unit configured to
perform, on a basis of a static dictionary that defines a relationship between a reserved word and a static code, assigning of the static code that corresponds to the reserved word to the reserved word in the source code and assigning of a dynamic code to the variable in the source code, to thereby generate a compressed code array, and
register, in a dynamic dictionary, the variable, the dynamic code assigned to the variable, and an attribute of the variable in association with each other; and
a vector calculation unit configured to calculate a vector of the source code, the calculating of the vector including: assigning a predetermined vector to the static code in the compressed code array and assigning a vector to the dynamic code in the compressed code array by embedding the dynamic code in a vector space on a basis of the attribute that corresponds to the dynamic code.

18. The information processing apparatus according to claim 17, wherein
the static dictionary further defines a relationship between a declaration statement and the attribute, and
the encoding unit further identifies the attribute that corresponds to the variable on a basis of the attribute of the declaration statement placed before the variable.

19. The information processing apparatus according to claim 17, wherein
the vector calculation unit
embeds a plurality of the dynamic codes that corresponds to the same attribute at analogous positions in a Poincare space, and
assigns vectors that correspond to the positions in the Poincare space to the embedded dynamic codes.

20. The information processing apparatus according to claim 17, wherein
the encoding unit generates the compressed code array for each line of the source code, and
the vector calculation unit further calculates a vector of the compressed code array for each line and generates an inverted index indicating a relationship between the vector of each compressed code array and a corresponding offset.

21. The information processing apparatus according to claim 17, wherein
the encoding unit generates the compressed code array for each function included in the source code, and
the vector calculation unit further calculates a vector of the compressed code array for each function and generates an inverted index indicating a relationship between the vector of each compressed code array and a corresponding offset.

22. The information processing apparatus according to any one of claims 17 to 21, further comprising: a similarity evaluation unit that evaluates a similarity level of a plurality of the source codes on a basis of the vector of the source code.

23. The information processing apparatus according to claim 20, further comprising: a similarity evaluation unit that identifies the line of the source code analogous to the line of the source code that serves as a query on a basis of the vector that corresponds to the line of the source code that serves as the query and the inverted index.

24. The information processing apparatus according to claim 21, further comprising: a similarity evaluation unit that identifies the function of the source code that corresponds to the line of the source code that serves as a query on a basis of the vector that corresponds to the function of the source code that serves as the query and the inverted index.
